# FASCICULE DE BREVET EUROPEEN

(11) **EP 2 606 786 B1**
(45) Date de publication et mention de la délivrance du brevet: **22.04.2015**
(21) Numéro de dépôt: 12195924.1
(22) Date de dépôt: 06.12.2012
(51) Int. Cl.: A47J 37/06

(54) **Appareil de cuisson avec sécurité de présence de plaques de chauffe**
Kochgerät mit Sicherheitspräsenz von Heizplatten
Cooking appliance with safety for the presence of heating plates

(30) Priorité: 21.12.2011 FR 1162235
(43) Date de publication de la demande: 26.06.2013
(73) Titulaire: SEB SA, 69130 Ecully (FR)
(72) Inventeur: Excoffier, Dominique, 74150 Rumilly (FR); Besson, Jean-Christophe, 74600 Seynod (FR)
(74) Mandataire: Novagraaf Technologies

(56) Documents cités:
- WO-A1-02/21985
- FR-A1- 2 855 570

## Description

La présente invention concerne un appareil de cuisson double face.

Il s'agit plus précisément d'un appareil de cuisson comprenant, comme connu en soi, des sous-ensembles respectivement inférieur et supérieur comprenant respectivement une structure et au moins une plaque de chauffe fixée à elle, les sous-ensembles étant relativement mobiles entre :
- une position fermée où les plaques de chauffe définissent entre elles une chambre fermée, et
- une position ouverte où la chambre est ouverte (ce qui permet d'y introduire l'aliment), la ou chaque plaque de chauffe inférieure étant reçue dans une cavité de la structure inférieure de façon amovible.

Notamment les gaufriers, appareils pour croques monsieur ou sandwich, et gril-viandes sont concernés.

EP 1 867 263, WO 02/21985 A1 et GB 960721 divulguent un appareil de cuisson de l'art antérieur.

Cependant, les plaques de chauffe, ou cuisson, amovibles divulguées dans ces documents ne permettent pas d'utiliser l'appareil avec un maximum de sécurité.

L'invention vise à remédier à une partie au moins de ces inconvénients.

L'appareil de l'invention se caractérise à cette fin en ce qu'il comprend un dispositif de sécurité de présence (au moins de la plaque de chauffe) comme défini dans la partie caractérisante de la revendication 1, comprenant un obstacle escamotable, c'est-à-dire mobile entre :
- une position active qu'il occupe quand la ou chaque plaque de chauffe amovible est absente de la cavité qui la reçoit et où il empêche la fermeture de la chambre par rapprochement des sous-ensembles, et
- une position inactive qu'il occupe quand la ou chaque plaque de chauffe amovible est présente dans ladite cavité et où il autorise la fermeture de la chambre.

Ainsi, l'appareil, et spécifiquement sa chambre de cuisson, ne pourra être physiquement fermé(e), donc fonctionnel(le), que si l'obstacle escamotable est en position inactive.

Selon une autre caractéristique, il est conseillé que :
- cet appareil comprenne, branchés ensemble, un interrupteur et une résistance électrique de chauffage de la plaque de chauffe, de sorte que la résistance ne peut pas chauffer si l'interrupteur est ouvert, et,
- en position inactive, l'obstacle établit l'interrupteur dans un état fermé où la résistance peut chauffer, tandis qu'en position active, l'obstacle établit l'interrupteur dans l'état ouvert.

Ainsi, la sécurité sera double : mécanique (physique) et électrique.

Pour allier efficacité, simplicité et fiabilité, on recommande que le dispositif de sécurité comprenne un corps que manoeuvre, sous l'action de la plaque de chauffe, un doigt lié au corps, auquel est également lié :
- l'obstacle qui est rappelé notamment en position active par un moyen de rappel, et
- un contacteur qui agit sur l'interrupteur.

Dans le même but, et pour un gain d'encombrement, on conseille :
- que le doigt est une bascule qui, sous l'action de la plaque de chauffe, fait pivoter l'obstacle à l'écart d'une patte du sous-ensemble supérieur, de façon à autoriser alors ladite fermeture de la chambre,
- voire même que le corps, l'obstacle et le contacteur soient fixés rigidement ensemble et le doigt et que le corps soient montés ensemble pivotants autour d'un axe parallèle à l'axe de rotation qui relie les sous-ensembles supérieur et inférieur,
- voire en alternative ou complément que le contacteur agisse par rotation sur l'interrupteur.

Dans un contexte de recherche de compacité, on propose par ailleurs que les sous-ensembles inférieur et supérieur tournent l'un par rapport à l'autre par l'intermédiaire d'un arbre et que le sous-ensemble supérieur comprenne, vers le côté opposé à celui où est situé l'arbre, une patte qui s'étendra en direction du sous-ensemble inférieur, quand on cherchera à fermer la chambre et qui prendra alors appui sur l'obstacle, en position active de cet obstacle.

On peut par ailleurs trouver intérêt à utiliser l'appareil pour un service à table rapide et convivial, via plusieurs plaques de chauffe amovibles. Allier praticité à sécurité est alors visé.

Il est alors proposé que l'appareil comprenne, outre plusieurs plaques de chauffe inférieure amovibles, plusieurs obstacles escamotables qui, en position active, empêcheront individuellement la fermeture de la chambre, chaque obstacle ne pouvant alors être mu de la position active vers l'inactive que par l'une desdites de chauffe inférieures, laquelle est différente d'un obstacle à l'autre.

Dans ce cas, on recommande qu'en outre, cet appareil puisse comprendre plusieurs interrupteurs branchés entre eux en série.

Ainsi, ce ne sera que si tous les interrupteurs sont passants que l'appareil fonctionnera.

De préférence, on prévoira en outre que l'appareil comprenne un dispositif de verrouillage libérable :
- établi entre la ou l'une au moins des plaques de chauffe inférieures et la structure inférieure,
- et comprenant une partie fixe et une partie mobile,
de façon à devoir libérer ladite plaque de chauffe verrouillée avant de pouvoir la retirer de l'appareil (en la déplaçant).

Ainsi, l'invention permettra de sécuriser la/chaque plaque de chauffe amovible tant dans sa coopération avec la structure, ici inférieure, qui la reçoit que dans son retrait pour service.

Prévoir que le dispositif de verrouillage libérable soit établi entre la structure inférieure et un manche thermiquement protégé, dont on recommande d'équiper chaque plaque de chauffe amovible, permettra de sécuriser les verrouillages/déverrouillages des plaques.

Prévoir par ailleurs que les sous-ensembles inférieur et supérieur soient articulés ensemble de sorte à offrir, dans l'état ouvert, une ouverture vers le haut à partir du sous-ensemble inférieur par où la ou les plaques de chauffe inférieures pourront être retirées de l'appareil en étant soulevées et introduites dans celui-ci en étant abaissée vers ledit sous-ensemble inférieur, permettra une facilité et sécurité de manipulation.

On recommande par ailleurs que le verrouillage libérable établi entre la plaque de chauffe inférieure concernée et la structure inférieure s'opère par un mouvement de descente de la plaque de chauffe vers la structure inférieure.

Notamment dans ce cadre, on recommande en outre d'ailleurs que la partie mobile du dispositif de verrouillage comprenne un poussoir disposé sous ladite plaque de chauffe inférieure et qui la pousse vers le haut.

A nouveau pour allier praticité et sécurité, on conseille que l'appareil comprenne un dispositif d'éjection de la ou de l'une au moins des plaques de chauffe inférieures, adapté à écarter cette plaque de la structure inférieure, lorsque le dispositif de verrouillage est libéré.

On facilite ainsi la manoeuvre de la plaque.

On recommande par ailleurs, dans le même cadre, que le verrouillage libérable établi entre la plaque de chauffe inférieure concernée et la structure inférieure s'opère par un mouvement de descente de la plaque de chauffe vers la structure inférieure.

Egalement dans le même cadre, on recommande:
- que des éléments chauffants disposés à proximité de thermostats soient adaptés à chauffer les plaques de chauffe supérieure et inférieures,
- et que l'un au moins des thermostats soit soumis à l'action d'un poussoir qui l'applique contre l'une des plaques de chauffe inférieures.

D'autres aspects inventifs, particularités et avantages apparaîtront dans la description qui suit, qui est présentée à titre d'exemple non limitatif et fait référence à des dessins où :
- la figure 1 représente une vue en perspective d'un appareil de cuisson selon un mode de réalisation possible de l'invention ;
- la figure 2 représente une vue en perspective d'une plaque de chauffe amovible munie d'un manche amovible selon un mode de réalisation possible de l'invention ;
- la figure 3 représente une vue en perspective de cette plaque de chauffe amovible avec le manche extrait de la plaque ;
- la figure 4 représente une vue latérale en coupe de cette plaque de chauffe amovible lorsque le dispositif de verrouillage est en position de verrouillage ;
- la figure 5 représente une vue latérale en coupe de cette plaque de chauffe amovible lorsque le dispositif de verrouillage est en position de déverrouillage ;
- la figure 6 représente une vue en perspective d'un appareil de cuisson en position ouverte sans les plaques de chauffe inférieure et supérieure, selon un mode de réalisation possible de l'invention ;
- la figure 7 représente une vue en coupe transversale de l'appareil de cuisson en position fermé dans un plan proche du côté avant de l'appareil de cuisson et parallèle à l'axe d'articulation ;
- la figure 8 représente le détail de la gorge de récupération au fond de l'structure inférieure de l'appareil de cuisson, selon la coupe de la figure 7 ;
- la figure 9 représente schématiquement un exemple de plaque de chauffe muni d'une poignée allongée droite et s'étendant dans le plan de la plaque de chauffe ;
- la figure 10 représente schématiquement un autre exemple de plaque de chauffe muni d'une poignée allongée comprenant une partie inclinée par rapport au plan de la plaque de chauffe ;
- la figure 11 est une alternative de la figure 2,
- les figures 12,13 montrent un dispositif de verrouillage libérable pour verrouiller ou non une plaque de chauffe (ici inférieure) vis-à-vis de la structure de l'appareil (ici la structure inférieure) ; la figure 14 montre une solution alternative,

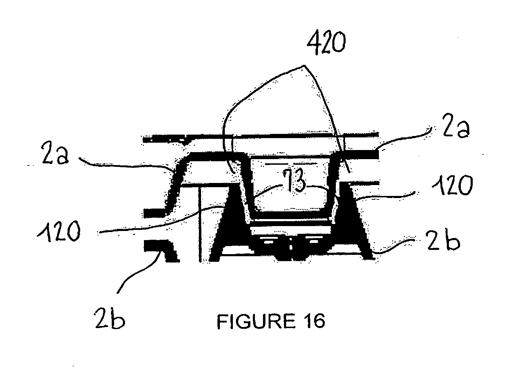

- les figures 15,16 montrent une réalisation pertinente ; la figure 16 est un détail de la figure 15,
- les figures 17,18 montrent en particulier un thermostat associé à plaque de chauffe inférieure, pour servir à la fois de capteur et de poussoir, via ici un ressort, pour faciliter le retrait de cette plaque si elle a été déverrouillée via le dispositif de verrouillage libérable,
- et les figures 19 à 22 montrent un dispositif de sécurité de présence de plaque, actif (figures 19,20), plaque absente, et inactif (figures 21,22), plaque présente.

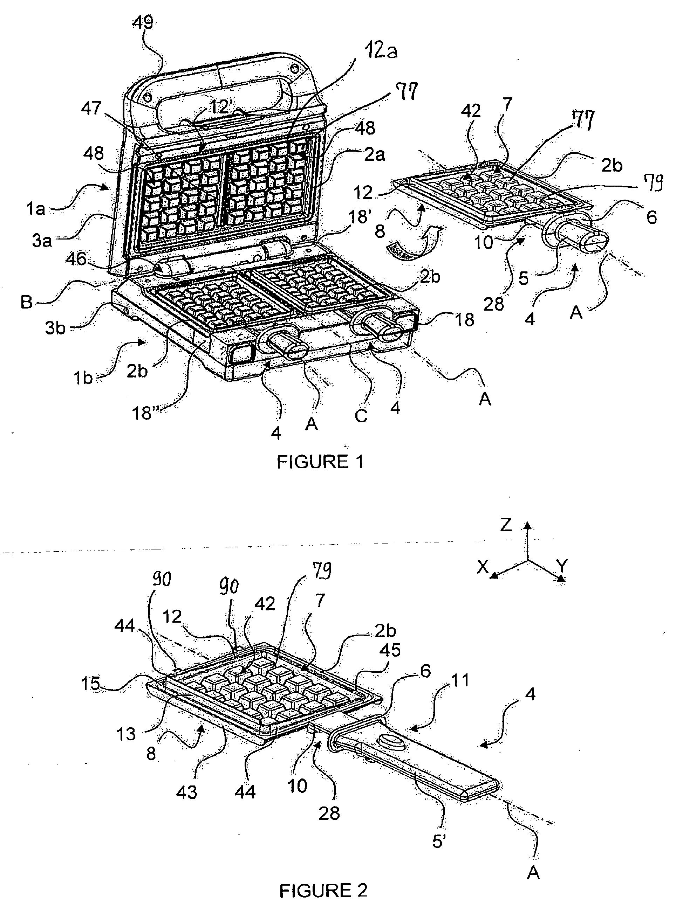

Les figures 1 à 10 représentent un gaufrier et des plaques de chauffe 2a, 2b pour gaufrier à titre d'exemple. Les plaques de chauffe peuvent présenter d'autres formes adaptées à d'autres utilisations comme celles précitées. Les plaques de chauffe 2a, 2b peuvent ne pas comprendre d'empreintes.

La figure 1 l'appareil de cuisson comprend un sous-ensemble supérieur 1a, et un sous-ensemble inférieur 1b articulés l'un par rapport à l'autre, selon un axe B, entre une position ouverte, et une position fermée. Une articulation à arbre 46 peut permettre cela.

Le sous-ensemble supérieur 1a comprend une structure supérieure 3a et au moins une plaque de chauffe supérieure 2a ; ici une seule.

Le sous-ensemble inférieur 1b comprend une structure inférieure 3b et ici deux plaques de chauffe inférieures 2b amovibles qu'en position fermée la plaque de chauffe supérieure 2a recouvre, en définissant entre elles une chambre de cuisson 26 pour aliments.

Les structures supérieure 3a et inférieure 3b sont des structures ou coques extérieures isolantes et résistantes à la chaleur.

Elles portent les plaques de chauffe et reçoivent des chauffages électriques 23a, 23b et 23c nécessaires à la cuisson de l'aliment considéré.

Les plaques de chauffe inférieures 2b comprennent chacune une poignée 4 pour leur préhension. Lorsque l'appareil de cuisson est ouvert, ces plaques 2b peuvent être directement posées sur la structure inférieure 3b et soulevées pour en être retirées.

Chaque plaque de chauffe comprend aussi une zone de cuisson 42 destinée à recevoir l'aliment. Cette zone est pleine et permet une cuisson de l'aliment par contact et conduction, ici via les résistances 24a....

L'amovibilité des plaques de chauffe inférieures permet d'utiliser plusieurs jeux différents avec un seul appareil de cuisson, chaque jeu pouvant être adapté à une cuisson spécifique.

La poignée 4 peut présenter plusieurs formes possibles à l'exclusion d'une forme en L ou en T. Ceci facilite sa préhension par l'utilisateur qui peut la saisir directement et retourner la plaque pour servir dans une assiette.

La poignée 4 de chaque plaque inférieure 2b comprend un manche 5 ou 5'. Le manche est de préférence constitué d'un matériau isolant thermique.

Chaque poignée 4 comprend une patte de liaison 10 reliant le manche à la plaque de chauffe inférieure 2b. La patte 10 s'étend sensiblement dans le plan de la plaque.

De préférence, la plaque de chauffe amovible 2b et la structure inférieure 3b coopèrent via un dispositif de verrouillage libérable (donc déverrouillable) 60 permettant d'immobiliser de façon réversible la plaque sur cette structure 3b.

Selon un mode de réalisation, la poignée 4 peut comprendre une partie de ce dispositif 60.

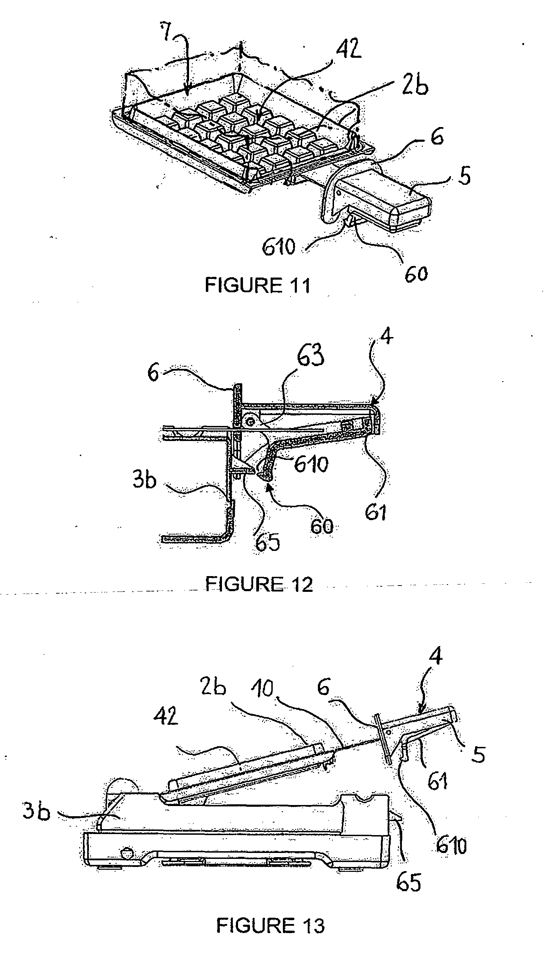

Figures 11-13, le dispositif de verrouillage libérable 60 comprend une gâchette 61 dont le mouvement est contrôlé par un moyen de rappel, tel un ressort, 63. La gâchette peut, suivant sa position être bloquée ou débloquée vis-à-vis d'une patte de retenue 65 de la structure 3b. Dans l'exemple préféré, la gâchette 61 et le ressort 63 sont prévus sur la poignée 4. Ici, la gâchette 61 est pivotante. En position bloquée, un crochet 610 de cette gâchette s'engage sous la patte de retenue 65, comme on le comprend au vu de la figure 12. Le ressort 63 rappelle la patte 65 vers la position bloquée.

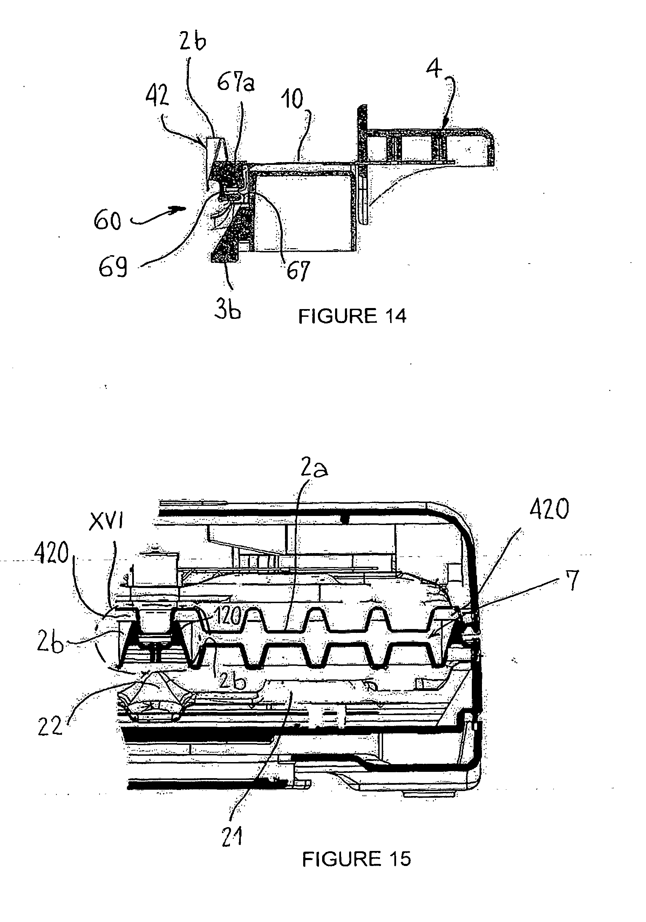

Figure 14, le dispositif de verrouillage libérable 60 comprend un ressort 67 déformable (par exemple une lame flexible) dont une excroissance 67a s'engage de façon libérable dans un creux 69, en position bloquée. Dans l'exemple préféré, le ressort 67 et son excroissance 67a sont prévus sur la poignée 4, le creux 69 sur la structure inférieure 3b. Plaque de chauffe inférieure 2b à plat, la poignée 4 est bloquée après qu'on ait forcé l'excroissance 67a dans le creux 69 (figure 14). Quand on la tire à nouveau vers le haut et qu'elle se place en position inclinée comme figure 13, la poignée se débloque dès lors qu'on a forcé l'excroissance 67a hors du creux.

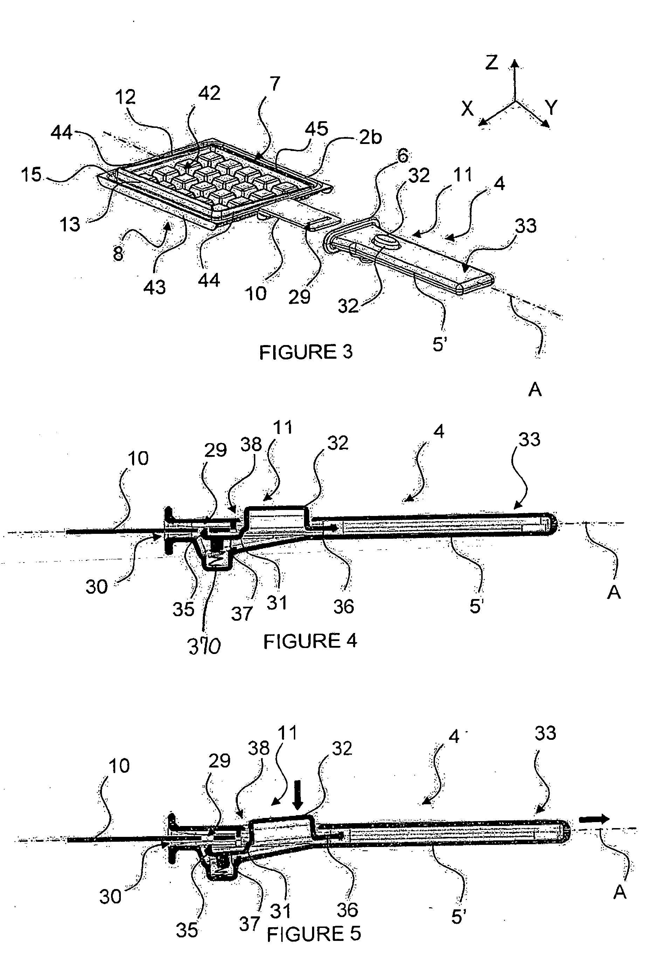

Les figures 2 et 3 montrent une réalisation où la plaque inférieure 2b est munie d'un manche amovible 5'. Le manche 5' peut comprendre une cavité 30 configurée pour permettre l'insertion de la patte 10. La patte 10 comprend une lumière 29. Le manche 5' comprend un dispositif de verrouillage 11 coopérant avec la patte 10, et plus précisément avec la lumière 29, de façon à permettre la fixation du manche 5' sur la patte et son détachement de celle-ci.

Le dispositif de verrouillage 11 peut comprendre un levier 31 intégré dans le manche 5'. Le levier 31 comprend un premier bras 36 fixé au manche et relié à un bouton 32. Le bouton 32 fait saillie sur la face supérieure 33 du manche 5' en ressortant à travers un orifice 38 formé dans la face supérieure 33. Le levier 31 est actionnable en appuyant sur le bouton 32.

Le levier 31 comprend un deuxième bras 37 relié au bouton 32. Un ergot de verrouillage 35 est configuré pour s'insérer dans la lumière 29, et se dégager de celle-ci. L'ergot de verrouillage 35 et le deuxième bras 37 sont logés dans la cavité 30. Le levier 31 est mobile par rapport au manche 5' entre une position de verrouillage dans laquelle l'ergot de verrouillage 35 est inséré dans la lumière 29, et une position de déverrouillage dans laquelle l'ergot 35 est dégagé de la lumière.

Le levier 31 fonctionne comme une lame à rappel. L'ergot de verrouillage 35 a tendance à être ramené naturellement vers le haut (vers sa position de verrouillage) par effet ressort.

Pour cela, le dispositif de verrouillage 11 peut comprendre un ressort 370.

Comme représenté sur les figures 2 et 3, chaque plaque inférieure 2b peut présenter une face inférieure 8 et une face supérieure 7 comprenant une bordure périphérique supérieure 12. La bordure périphérique supérieure 12 délimite au moins partiellement la zone de cuisson 42.

La bordure périphérique supérieure 12 présente une partie de bordure moins haute 45, opposée à la partie de bordure plus haute 13, et perpendiculaire aux parties de bordure inclinées 44.

Pour avoir une coupelle, ou plaque de chauffe, qui ne soit ni gauche, ni droite, on peut aussi positionné le bord plus bas 45 sur l'arrière, côté opposé à la poignée.

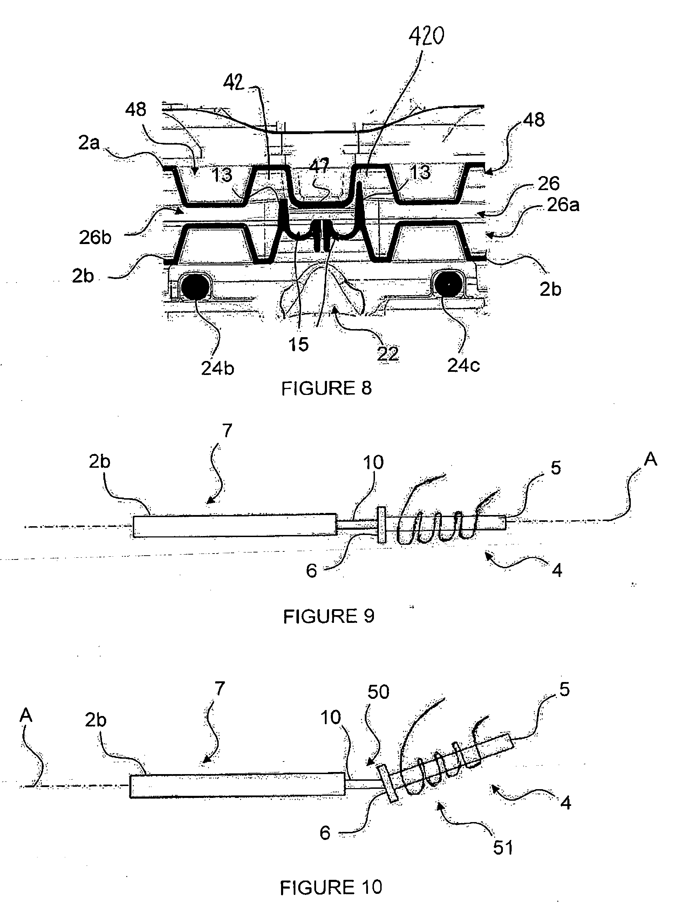

Appareil fermé, cette/chaque partie de bordure plus haute 13 s'engage dans un creux 420 de la zone de cuisson 42 de la/des plaques de chauffe supérieur(s) ; cf. figure 8.

Selon un mode de réalisation possible, la bordure périphérique supérieure 12 de chaque plaque inférieure 2b est entourée par une rainure 15.

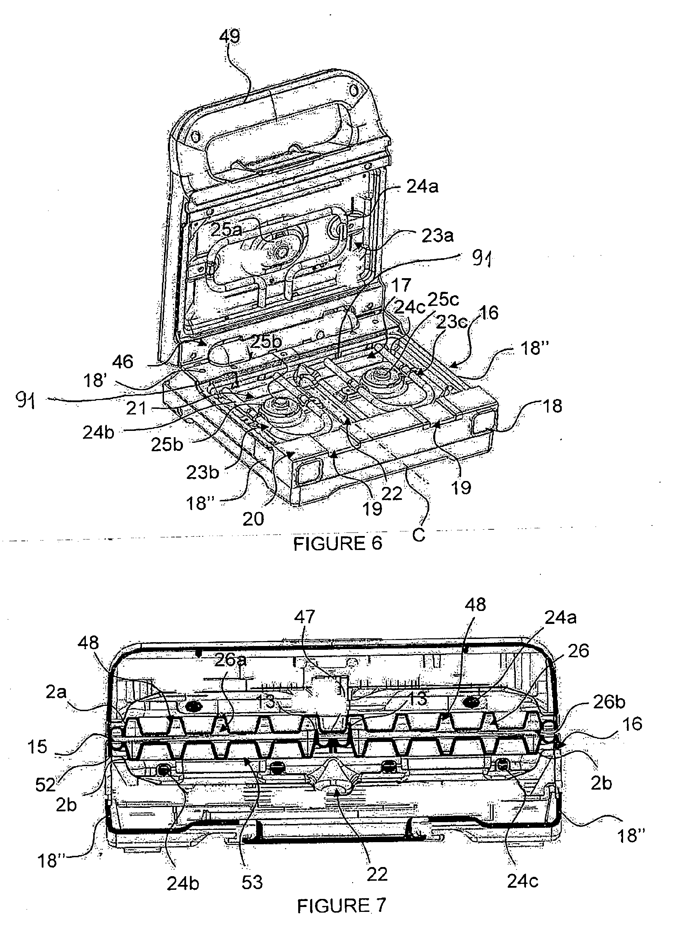

La figure 6 représente une vue en perspective d'un appareil de cuisson en position ouverte, sans les plaques inférieure 2b et supérieure 2a, selon un mode de réalisation possible de l'invention.

Chaque plaque inférieure 2b est reçue dans une cavité 17 de la structure inférieure 3b. Pour cela, la structure peut comprendre une paroi avant 18, une paroi arrière 18' et deux parois latérales 18" opposées, délimitant la cavité. Dans la cavité est logé au moins un chauffage électrique 23a, 23b, 23c. La cavité 17 s'étend ici en contrebas du bord 16.

La structure inférieure 3b comprend un tel bord périphérique 16 formé au dessus desdites parois 18, 18' et 18". Le bord 16 entoure la cavité 17 de chauffe.

Chaque plaque inférieure 2b présente un bord périphérique inférieur sur sa face inférieure 8. Le bord périphérique inférieur est en appui sur le bord 16 lorsque la plaque 2b est supportée par la structure inférieure 3b.

Le bord périphérique supérieur 16 permet à l'utilisateur de poser directement les plaques inférieures 2b amovibles sur la structure inférieure 3b, et de les retirer directement de la structure inférieure 3b.

Selon une autre réalisation (non représentée), la cavité 17 pourrait former une empreinte ayant l'aspect d'une contre-forme de la face inférieure 8 de la plaque inférieure 2b. Cette face 8 reposerait alors sur l'empreinte.

Figure 6, l'appareil de cuisson comprend une paroi avant 18 comportant deux logements 19 sur sa face supérieure 20, chaque logement 19 étant adapté à recevoir la patte de liaison 10.

Lorsque la plaque de chauffe inférieure 2b est supportée par la structure inférieure 3b, la portion de patte 28 non recouverte par le manche vient se loger dans le logement 19 de façon à former, sur le dessus de la paroi avant 18, une surface qui est sensiblement continue et plane, sans saillie.

Ceci permet d'obtenir un appareil de cuisson relativement hermétique lorsque la structure supérieure 3a recouvre la structure inférieure 3b.

Lorsque les deux plaques de chauffe inférieures 2b sont supportées par la structure inférieure 3b, la cavité de chauffe 17 peut être entièrement obturée par les plaques de chauffe inférieures 2b.

La structure inférieure 3b comprend un fond 21 délimitant en partie la cavité de chauffe 17. Le fond 21 comporte une gorge de récupération 22. Le fond 21 sera avantageusement un déflecteur thermique. Il peut être en acier.

La gorge de récupération 22 forme un troisième dispositif de sécurité pour protéger les chauffages électriques en cas de débordement de pâte.

Le sous-ensemble chauffant supérieur 1a comprend un chauffage électrique 23a disposé entre la plaque 2a, et la structure 3a.

Le sous-ensemble inférieur 1b peut comprendre un ou plusieurs, tels deux, chauffages électriques 23b, 23c. Le/chaque chauffage électrique est de préférence disposé dans la cavité de chauffe 17, entre la structure inférieure 3b et l'une des plaques de chauffe inférieures 2b, lorsque celle-ci est supportée par la structure inférieure 3b.

De préférence, le/chaque chauffage électrique comprend, où est lié à, un thermostat 25a, 25b, 25c. Les thermostats seront de préférence positionnés sensiblement au centre des plaques de chauffe inférieures 2b et sont en contact avec elles.

De préférence, le/chaque électrique comprend un élément chauffant 24a, 24b, 24c, ici une résistance électrique.

Ici chaque résistance est disposée autour d'un thermostat.

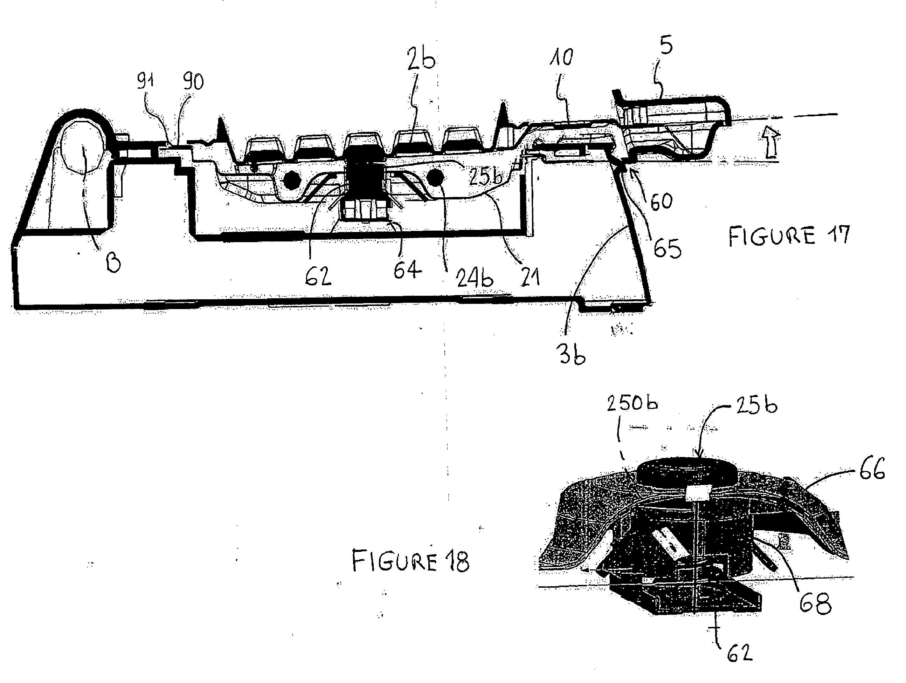

On conseille, pour sécuriser la qualité du chauffage et de la détection, à coût réduit, que l'un au moins des thermostats, tel 25b (figure 18), soit soumis à l'action d'un poussoir 62 qui l'applique contre l'une des plaques de chauffe inférieures, ici 2b, dans l'état opérationnel de cette plaque, c'est-à-dire lorsqu'elle est verrouillée sur la structure qui la porte, ici 3b.

A l'arrière (dessous) le poussoir est ici en appui, en 64, comme on le voit figure 17 où la gâchette 61 est débloquée vis-à-vis de la patte de retenue 65 et où le thermostat 25b en cause est donc écarté (du dessous) de la plaque 2b en regard. En 66, on voit la plaque réflectrice qui s'étend entre chaque plaque de chauffe et l'élément chauffant 24a... en cause et à laquelle le corps 68 du poussoir 62 est ici fixé, par-dessous.

Chaque thermostat peut comprendre des moyens de détection, tels 250b (figure 18), aptes à détecter l'absence d'une plaque inférieure 2b. Lorsque la plaque inférieure 2b est retirée, le thermostat 25a, 25b, 25c détecte une chute de température. L'élément chauffant 24a, 24b, 24c associé est alors arrêté automatiquement sans perturber la régulation en température de l'autre plaque de chauffe inférieure 2b qui reste en place sur la structure inférieure 3b.

Le sous-ensemble supérieur 1a peut comprendre une poignée 49, comme représentée sur les figures 1 et 6. Cette poignée permet d'ouvrir et de fermer l'appareil de cuisson.

Figures 2,6,17 réunies on notera encore que la plaque inférieure 2b peut présenter, vers l'opposé de la poignée 4, au moins un (ici deux) ergots 90 qui s'engage dans au moins une fente 91 de la structure inférieure 3b et qui produit un effet charnière quand, verrou libéré (tel 60), le dispositif d'éjection écarte cette plaque de chauffe de la structure inférieure, la plaque se positionnant alors de biais ; voir flèche figure 17.

De ce qui précède, on a donc tiré en particulier :
- que les sous-ensembles 1a,1b de l'appareil sont mobiles l'un par rapport à l'autre entre une position fermée où les plaques de chauffe définissent entre elles la chambre 26, qui est alors fermée, et une position ouverte où cette chambre est ouverte,
- et que la ou chaque plaque de chauffe inférieure 2b est reçue dans une cavité, telle 17, de la structure inférieure de façon verrouillable (verrou 60 par exemple) et libérable, pour pouvoir en être amovible.

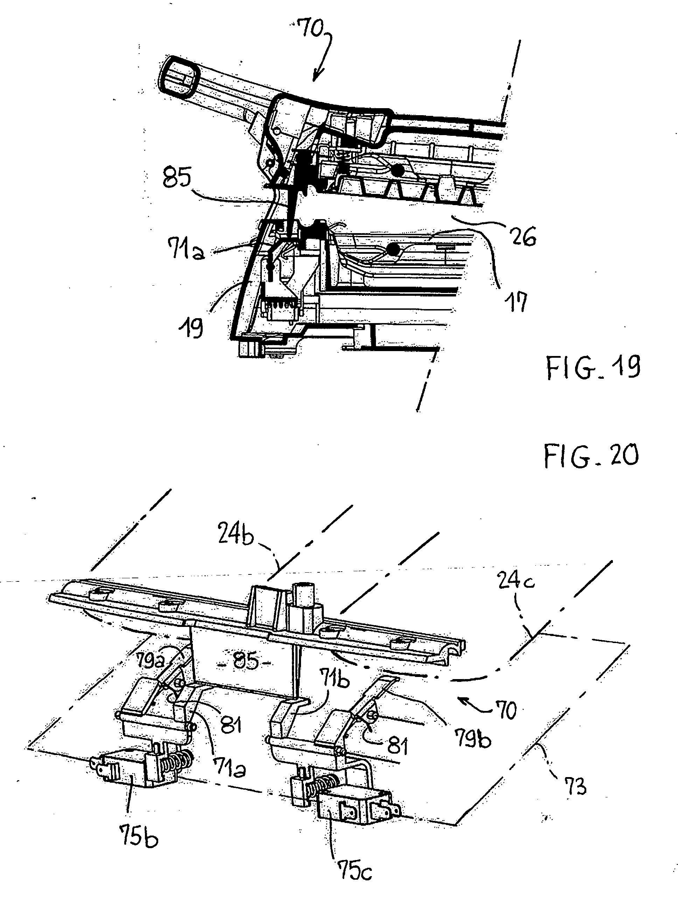

Figures 19-22, on voit que l'appareil imaginé comprend en outre le dispositif 70 de sécurité de présence de la/chaque plaque de chauffe amovible, ici 2b.

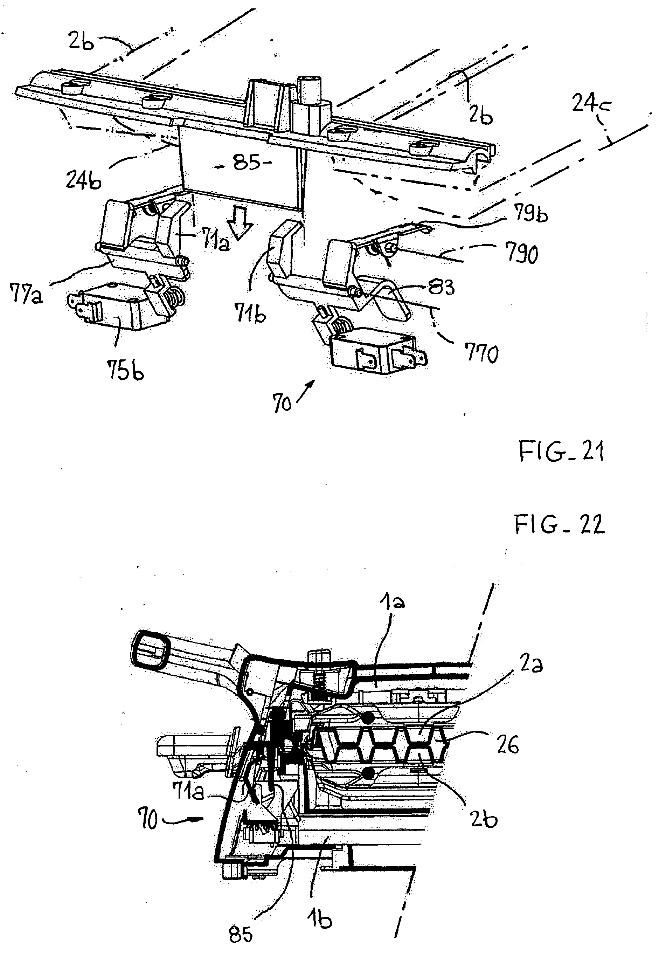

Comme montré figures 20-21, ce dispositif 70 de sécurité comprend (au moins) un obstacle, ici deux 71a, 71b, mobile(s) entre :
- une position active occupée figures 19,20, quand la ou chaque plaque de chauffe amovible est absente de la cavité 17 qui la reçoit et où ce(s) obstacle(s) empêche(nt) la fermeture de la chambre 26 par rapprochement des sous-ensembles, et
- une position inactive occupée figures 21,22 quand la ou chaque plaque de chauffe amovible 2b est présente dans ladite cavité et où le(s) obstacle(s) autorise(nt) la fermeture de la chambre.

Comme illustré l'appareil comprend par ailleurs, branchés ensemble (ligne schématique 73 figure 20), au moins un interrupteur, ici deux 75b,75c, et au moins une résistance électrique, ici deux 24b,24c, de chauffage de la/des plaques de chauffe, de sorte que la résistance concernée ne peut pas chauffer si l'interrupteur est ouvert, et :
- en position inactive (figure 21), l'obstacle considéré 71a,71b établit l'interrupteur dans un état fermé où la résistance peut chauffer,
- tandis qu'en position active (figure 20), l'obstacle établit l'interrupteur dans l'état ouvert.

On préférera que le dispositif de sécurité 70 comprenne (au moins) un corps (77a,77b figure 21) que manoeuvrera, sous l'action de la plaque de chauffe, (au moins) un doigt (79a,79b figure 20) lié au corps, auquel est également lié :
- l'obstacle qui est rappelé notamment en position active (figure 20) par un ou plusieurs moyen de rappel tels 81,
- un contacteur 83 (figure 21) qui agit sur l'interrupteur considéré.

Dans la réalisation illustrée, le(s) moyen(s) de rappel 81a sont montés pour rappeler le(s) doigt(s) 79a,79b vers une position saillante qui interfère avec la plaque 2b considérée quand on veut la placer dans sa cavité réceptrice (figure 20). De(s) moyen(s) de rappel peuvent aussi être montés entre l'obstacle et le support de l'interrupteur.

Comme préféré, on voit figures 20,21, en tant que doigt 79a,79b(figure 21), une bascule qui, sous l'action de la plaque de chauffe 2b, fait pivoter l'obstacle concerné à l'écart d'une patte 85 du sous-ensemble supérieur, de façon à autoriser alors ladite fermeture de la chambre.

La encore comme préféré, on voit toujours figures 20,21 que le corps (77a,77b figure 21), l'obstacle 71a,71b et le contacteur sont fixés rigidement ensemble et le doigt et le corps sont montés ensemble pivotants autour d'un axe, respectivement 790,770, parallèle à l'axe B de rotation qui relie les sous-ensembles supérieur et inférieur 1a,1b et autour duquel l'un pivote par rapport à l'autre.

Notamment pour un gain d'encombrement, on préfèrera que, comme illustré, le contacteur 83 agisse par rotation sur 1'/les interrupteur(s) 75b,75c pour établir les états ouvert (dans un sens) et fermé (sens inverse).

En particulier dans l'application gaufrier illustrée, on pourra donc avoir l'utilité d'un appareil comprenant plusieurs plaques de chauffe inférieure amovibles, plusieurs obstacles escamotables (ici autant : deux)71a,71b qui, en position active, empêchent individuellement la fermeture de la chambre 26, chaque obstacle ne pouvant être mu de la position active vers l'inactive que par l'une desdites de chauffe inférieures 2b, laquelle est différente d'un obstacle à l'autre.

En particulier dans ce cas, on conseille pour la sécurité électrique que plusieurs interrupteurs, ici donc deux 75b,75cb, soient branchés entre eux en série. Plusieurs, ici deux, résistances électriques 24b,24c sont par ailleurs prévues, placées donc sous le contrôle des interrupteurs.

Pour agir sur l'/les obstacle(s), on a prévu que les sous-ensembles inférieur et supérieur, qui tourneront donc l'un par rapport à l'autre, par l'intermédiaire de l'arbre 46, le sous-ensemble supérieur 1a comprendra donc favorablement, vers le côté (AV) opposé à celui (AR ; figure 1) où est situé l'arbre, une patte 85 qui s'étendra sous la plaque de chauffe supérieure quand on cherche à fermer la chambre 26 et qui prendra alors appui sur(butera contre) l'/les obstacle(s), en position active de cet/ces obstacle(s) ; voir figure 20.

Ainsi, l'appareil demeurera alors partiellement ouvert ; voir figure 19.

Dans la description qui précède, on doit comprendre que des variantes de réalisation et les caractéristiques présentées peuvent se combiner en tout ou partie dans le cadre des revendications.

En outre, plusieurs caractéristiques peuvent individuellement constituer un moyen indépendant a priori innovant dans le cadre des revendications, en particulier : un appareil de cuisson comprenant des sous-ensembles respectivement inférieur et supérieur (1a,1b) comprenant respectivement une structure (3a,3b), au moins une plaque de chauffe (2a,2b) fixée à elle, un interrupteur et une résistance électrique (de chauffage de la plaque), les sous-ensembles étant relativement mobiles entre une position fermée où les plaques de chauffe définissent entre elles une chambre fermée et une position ouverte où la chambre est ouverte, la ou chaque plaque de chauffe inférieure (2b) étant reçue dans une cavité de la structure inférieure de façon amovible, cet appareil étant **caractérisé en ce qu'il** comprend un dispositif de sécurité de présence comprenant un obstacle mobile en fonction de la présence ou non de la plaque de chauffe amovible dans la cavité qui la reçoit,
- l'interrupteur et la résistance électrique étant branchés ensemble, de sorte que la résistance ne peut pas chauffer si l'interrupteur est ouvert,
- et, quand la plaque de chauffe est présente dans la cavité, l'obstacle établit l'interrupteur dans un état fermé où la résistance peut chauffer, tandis que quand la plaque en est absente, l'obstacle établit l'interrupteur dans l'état ouvert.

Dans ce cas, on préfèrera par ailleurs que l'obstacle dudit dispositif soit mobile entre :
- une position active qu'il occupe quand la ou chaque plaque de chauffe amovible est absente de la cavité qui la reçoit et où il empêche la fermeture de la chambre par rapprochement des sous-ensembles, et
- une position inactive qu'il occupe quand la ou chaque plaque de chauffe amovible est présente dans ladite cavité et où il autorise la fermeture de la chambre.

## Revendications

1. Appareil de cuisson comprenant des sous-ensembles respectivement inférieur (1b) et supérieur (1a) comprenant respectivement une structure (3a,3b) et au moins une plaque de chauffe (2a,2b) fixée à elle, les sous-ensembles étant relativement mobiles entre une position fermée où les plaques de chauffe définissent entre elles une chambre (26) fermée et une position ouverte où la chambre est ouverte, la ou chaque plaque de chauffe inférieure (2b) étant reçue dans une cavité (17) de la structure inférieure (3b) de façon amovible, **caractérisé en ce qu'il** comprend un dispositif (70) de sécurité de présence comprenant un obstacle (71a, 71b) mobile entre :
- une position active qu'il occupe quand la ou chaque plaque de chauffe (2a, 2b) amovible est absente de la cavité (17) qui la reçoit et où il empêche la fermeture de la chambre (26) par rapprochement des sous-ensembles (1a, 1b), et
- une position inactive qu'il occupe quand la ou chaque plaque de chauffe (2a, 2b) amovible est présente dans ladite cavité (17) et où il autorise la fermeture de la chambre (26).

2. Appareil selon la revendication 1, **caractérisé en ce qu'il** comprend, branchés ensemble, un interrupteur (75b, 75c) et une résistance électrique (24b, 24c) de chauffage de la plaque de chauffe (2a, 2b), de sorte que la résistance ne peut pas chauffer si l'interrupteur est ouvert, et l'obstacle en position inactive, (71a, 71b) établit l'interrupteur (75b, 75c) dans un état fermé où la résistance (24b, 24c) peut chauffer, tandis que l'obstacle en position active, (71a, 71b) établit l'interrupteur dans l'état ouvert.

3. Appareil selon la revendication 2, **caractérisé en ce que** le dispositif de sécurité (70) comprend un corps (77a, 77b) que manoeuvre, sous l'action de la plaque de chauffe (2a, 2b), un doigt (79a, 79b) lié au corps, auquel est également lié :
- l'obstacle (71a, 71b) qui est rappelé en position active par un moyen de rappel (81a), et
- un contacteur (83) qui agit sur l'interrupteur.

4. Appareil selon la revendication 3, **caractérisé en ce que** le doigt (79a, 79b) est une bascule qui, sous l'action de la plaque de chauffe (2a, 2b), fait pivoter l'obstacle (71a, 71b) à l'écart d'une patte (10) du sous-ensemble supérieur (1a), de façon à autoriser alors ladite fermeture de la chambre (26).

5. Appareil selon la revendication 4, **caractérisé en ce que** le corps (77a, 77b), l'obstacle (71a, 71b) et le contacteur (83) sont fixés rigidement ensemble et le doigt (79a, 79b) et le corps (77a, 77b) sont montés ensemble pivotants autour d'un axe (790, 770) parallèle à l'axe B de rotation qui relie les sous-ensembles supérieur (1a) et inférieur (1b).

6. Appareil selon l'une des revendications 3 à 5, **caractérisé en ce que** le contacteur (83) agit par rotation sur l'interrupteur (75a, 75c).

7. Appareil selon la revendication 2 ou la revendication 2 et l'une des revendications 3 à 6, **caractérisé en ce qu'il** comprend plusieurs plaques de chauffe inférieure amovibles (2b), plusieurs obstacles escamotables (71a, 71b) qui, en position active, empêchent individuellement la fermeture de la chambre (26), chaque obstacle ne pouvant être mu de la position active vers l'inactive que par l'une desdites plaques de chauffe inférieures (2b), laquelle est différente d'un obstacle à l'autre.

8. Appareil selon la revendication 7, **caractérisé en ce que** qu'il comprend plusieurs interrupteurs (75b, 75c) branchés entre eux en série.

9. Appareil selon l'une des revendications 1 à 8, **caractérisé en ce que** les sous-ensembles inférieur (1b) et supérieur (1a) tournent l'un par rapport à l'autre par l'intermédiaire d'un arbre (46) et le sous-ensemble supérieur (1a) comprend, vers le côté opposé à celui où est situé l'arbre (46), une patte (85) qui s'étend en direction du sous-ensemble inférieur (1b) quand on cherche à fermer la chambre (26) et qui prend alors appui sur l'obstacle (71a, 71b), en position active de cet obstacle.

10. Appareil selon l'une des revendications 1 à 9, **caractérisé en ce que** la plaque de chauffe inférieure (2b) comprend un dispositif (60) de verrouillage libérable coopérant avec la structure inférieure (3b) pour l'immobiliser sur la structure inférieure (3b).

## Patentansprüche

1. Gargerät, umfassend eine jeweils untere (1b) und obere (1a) Unteranordnung, die jeweils eine Struktur (3a, 3b) und mindestens eine daran befestigte Heizplatte (2a, 2b) umfassen, wobei die Unteranordnungen zwischen einer geschlossenen Position, in der die Heizplatten zwischen sich eine geschlossene Kammer (26) definieren, und einer offenen Position, in der die Kammer offen ist, relativ beweglich sind, wobei die oder jede untere Heizplatte (2b) entfernbar in einem Hohlraum (17) der unteren Struktur (3b) aufgenommen ist, **dadurch gekennzeichnet, dass** es eine Anwesenheitssicherheitsvorrichtung (70) umfasst, die ein Hindernis (71a, 71b) umfasst, das zwischen
- einer aktiven Position, die es einnimmt, wenn die oder jede entfernbare Heizplatte (2a, 2b) nicht in dem sie aufnehmenden Hohlraum (17) ist, und in der es das Schließen der Kammer (26) durch Annäherung der Unteranordnungen (1a, 1b) verhindert, und
- einer inaktiven Position, die es einnimmt, wenn die oder jede entfernbare Heizplatte (2a, 2b) in dem Hohlraum (17) ist, und in der es das Schließen der Kammer (26) gestattet,
beweglich ist.

2. Gerät nach Anspruch 1, **dadurch gekennzeichnet, dass** es einen Schalter (75b, 75c) und einen elektrischen Widerstand (24b, 24c) zur Erhitzung der Heizplatte (2a, 2b) zusammengeschaltet umfasst, so dass der Widerstand nicht erhitzen kann, wenn der Schalter geöffnet ist und das Hindernis (71a, 71b) in der inaktiven Position den Schalter (75b, 75c) in einen geschlossenen Zustand versetzt, in dem der Widerstand (24b, 24c) erhitzen kann, während das Hindernis (71a, 71b) in der aktiven Position den Schalter in den geöffneten Zustand versetzt.

3. Gerät nach Anspruch 2, **dadurch gekennzeichnet, dass** die Sicherheitsvorrichtung (70) einen Körper (77a, 77b) umfasst, den unter der Wirkung der Heizplatte (2a, 2b) ein mit dem Körper verbundener Finger (79a, 79b) betätigt, mit dem auch Folgendes verbunden ist:
- das Hindernis (71a, 71b), das durch ein Rückholmittel (81a) in die aktive Position zurückgeholt wird, und
- ein Schütz (83), das auf den Schalter wirkt.

4. Gerät nach Anspruch 3, **dadurch gekennzeichnet, dass** der Finger (79a, 79b) ein Kippglied ist, das das Hindernis (71a, 71b) unter der Wirkung der Heizplatte (2a, 2b) von einer Lasche (10) der oberen Unteranordnung (1a) wegschwenkt, um somit das Schließen der Kammer (26) zu gestatten.

5. Gerät nach Anspruch 4, **dadurch gekennzeichnet, dass** der Körper (77a, 77b), das Hindernis (71a, 71b) und das Schütz (83) starr aneinander befestigt sind und der Finger (79a, 79b) und der Körper (77a, 77b) gemeinsam um eine Achse (790, 770) schwenkend montiert sind, die parallel zur Rotationsachse B verläuft, die die obere (1a) und untere Unteranordnung (1b) verbindet.

6. Gerät nach einem der Ansprüche 3 bis 5, **dadurch gekennzeichnet, dass** das Schütz (83) durch Drehung auf den Schalter (75a, 75c) wirkt.

7. Gerät nach Anspruch 2 oder Anspruch 2 und nach einem der Ansprüche 3 bis 6, **dadurch gekennzeichnet, dass** es mehrere entfernbare untere Heizplatten (2b) und mehrere einziehbare Hindernisse (71a, 71b) umfasst, die in der aktiven Position einzeln das Schließen der Kammer (26) verhindern, wobei jedes Hindernis nur durch eine der unteren Heizplatten (2b), die von einem Hindernis zum anderen verschieden ist, aus der aktiven Position in die inaktive bewegt werden kann.

8. Gerät nach Anspruch 7, **dadurch gekennzeichnet, dass** es mehrere Schalter (75b, 75c) umfasst, die in Reihe geschaltet sind.

9. Gerät nach einem der Ansprüche 1 bis 8, **dadurch gekennzeichnet, dass** sich die untere (1b) und die obere Unteranordnung (1a) mittels einer Welle (46) bezüglich einander drehen und die obere Unteranordnung (1a) an der Seite, die der gegenüberliegt, an der sich die Welle (46) befindet, eine Lasche (85) umfasst, die sich in Richtung der unteren Unteranordnung (1b) erstreckt, wenn man versucht, die Kammer (26) zu schließen, und die dann in der aktiven Position des Hindernisses (71a, 71b) an diesem zur Anlage kommt.

10. Gerät nach einem der Ansprüche 1 bis 9, **dadurch gekennzeichnet, dass** die untere Heizplatte (2b) eine freigebbare Verriegelungsvorrichtung (60) umfasst, die mit der unteren Struktur (3b) zusammenwirkt, um sie an der unteren Struktur (3b) festzuhalten.

## Claims

1. Cooking appliance comprising respectively a lower subassembly (1b) and an upper subassembly (1a) respectively including a structure (3a, 3b) and at least one heating plate (2a, 2b) fixed to it, the sub-assemblies being relatively movable between a closed position wherein the heating plates define between them a closed chamber (26) and an open position wherein the chamber is open, the or each lower heating plate (2b) being removably received in a cavity (17) of the lower structure (3b), **characterized in that** it comprises a presence safety device (70) including an obstacle (71a, 71b) mobile between:
- an active position that it occupies when the or each removable heating plate (2a, 2b) is absent from the cavity (17) that receives it and wherein it prevents closure of the chamber (26) by moving toward each other the sub-assemblies (1a, 1b), and
- an inactive position that it occupies when the or each removable heating plate (2a, 2b) is present in said cavity (17) and wherein it allows closure of the chamber (26).

2. Appliance according to claim 1, **characterized in that** it comprises, connected together, a switch (75b, 75c) and an electrical resistance (24b, 24c) for heating the heating plate (2a, 2b), so that the resistance cannot heat up if the switch is open, and the obstacle (71a, 71b) in the inactive position, sets the switch (75b, 75c) in a closed state wherein the resistance (24b, 24c) can heat up, whereas in the active position the obstacle (71a, 71b) sets the switch in the open state.

3. Appliance according to claim 2, **characterized in that** the safety device (70) comprise a body (77a, 77b) that by virtue of the action of the heating plate (2a, 2b) is operated by a finger (79a, 79b) connected to the body, to which is also connected:
- the obstacle (71a, 71b), which is biased into the active position by biasing means (81a), and
- a contact member (83) that acts on the switch.

4. Appliance according to claim 3, **characterized in that** the finger (79a, 79b) is a rocker that by virtue of the action of the heating plate (2a, 2b) pivots the obstacle (71a, 71b) away from a tab (10) of the upper subassembly (1a) so as to then allow said closure of the chamber (26).

5. Appliance according to claim 4, **characterized in that** the body (77a, 77b), the obstacle (71a, 71b) and the contact member (83) are rigidly fastened together and the finger (79a, 79b) and the body (77a, 77b) are mounted so as to pivot together about an axis (790, 770) parallel to the rotation axis B about which the upper subassembly (1a) and the lower subassembly (1b) are connected.

6. Appliance according to any one of claims 3 to 5, **characterized in that** the contact member (83) acts by rotation on the switch (75a, 75c).

7. Appliance according to claim 2 or claim 2 and any one of claims 3 to 6, **characterized in that** it comprises a plurality of removable bottom heating plates (2b), a plurality of retractable obstacles (71a, 71b) which, in an active position, individually prevent closure of the chamber (26), each obstacle being movable from the active position to the inactive position only by one of said lower heating plates (2b), which differs from one obstacle to another.

8. Appliance according to claim 7, **characterized in that** it comprises a plurality of switches (75b, 75c) connected together in series.

9. Appliance according to any one of claims 1 to 8, **characterized in that** the lower subassembly (1b) and the upper subassembly (1a) rotate relative to each other by means of a shaft (46) and the upper subassembly (1a) comprises, towards the side opposite that where the shaft (46) is located, a lug (85) that extends toward the lower subassembly (1b) when it is desired to close the chamber (26) and then supported on the obstacle (71a, 71b) in the active position of that obstacle.

10. Appliance according to any one of claims 1 to 9, **characterized in that** the bottom heating plate (2b) comprises a releasable locking device (60) cooperating with the lower structure (3b) to immobilize it on the lower structure (3b).
